# EUROPEAN PATENT APPLICATION

(11) **EP 3 171 607 A1**
(43) Date of publication of application: **24.05.2017**
(21) Application number: 15306848.1
(22) Date of filing: 23.11.2015
(51) Int. Cl.: H04N 21/254, H04L 29/06, H04N 21/258, H04N 21/266, H04N 21/4627, H04W 4/00

(54) **METHOD FOR ACCESSING AUDIO/VIDEO CONTENT AND CORRESPONDING DEVICE**

(71) Applicant: Thomson Licensing, 92130 Issy-les-Moulineaux (FR)
(72) Inventor: COLMAGRO, Jean-Claude, 35576 Cesson-Sévigné Cedex (FR); MENANT, Pascal, 35576 Cesson-Sévigné Cedex (FR); MAZZANTE, Angelo, 35576 Cesson-Sévigné Cedex (FR); MICHEL, Hervé, 35576 Cesson-Sévigné Cedex (FR); BOUVET, Philippe, 35576 Cesson-Sévigné Cedex (FR); PEAUDOUYE, Anne, 35576 Cesson-Sévigné Cedex (FR)
(74) Representative: Huchet, Anne

(57) **Abstract**

Using a mobile device, data related to audio/video content is read from a medium using a contactless information sharing arrangement, the data comprising a resource locator identifying a provider for providing the audio/video content. Using the same mobile device, second data related to an identification of a subscriber of the provider is read from an audio/video receiver device for accessing the audio/video content. A request is transmitted over a data communication network to the identified provider, the request comprising the identification of the subscriber. In response to the request, the audio/video receiver receives the audio/video content renderable by the audio/video receiver.

## Description

### FIELD

The present disclosure generally relates to the field of the rendering of audio/video services and is in particular related to a mobile device as an intermediate device for setting up a rendering of an audio/video service on a rendering device.

### BACKGROUND

US 7,756,467 B2 to Bent et al. describes a near field communication (NFC) capable wireless communication device reading an NFC tag associated to a media sales display. The NFC interface receives data related to multimedia content from the NFC tag. Based on the received data, the wireless communication device establishes a communication link with a multimedia server via a wireless communication network and controls a multimedia server to download information associated with the multimedia content to a user-specified destination device. Once downloaded, the user of the user-specified destination device may distribute the information to other storage media and/or audio or video devices for rendering.

An inconvenience to this approach is that, from a content protection perspective, the download and distribution of the information to other storage media and/or audio or video devices comprise a serious risk of copyright infringement. This is because, once the information is downloaded it is not controlled to which other devices the information is distributed by the user. Content providers however need to be ensured that digital rights management (DRM) is respected and enforced.

There is thus a need for a solution that ensures that content is distributed in a distribution chain where digital rights management is respected, controlled and proven.

### SUMMARY

The present disclosure aims at alleviating some of the deficiencies of rendering of audio/video services.

To this end, the present principles comprise a method for accessing audio/video content provided by a provider through an audio/video receiver, implemented by a mobile device comprising at least one contactless information sharing arrangement. The method comprises reading first data related to the audio/video content from a medium using the at least one contactless information sharing arrangement, the first data comprising a resource locator identifying the provider; reading second data related to an identification of a subscriber of the provider from the audio/video receiver using the at least one contactless information sharing arrangement; and transmitting over a data communication network a request to the provider identified by the resource locator, the request comprising the second data, wherein responsive to the request, the audio/video receiver receives the audio/video content renderable by the audio/video receiver.

According to a variant embodiment of the method, the first data further comprises a serial number of a contactless information tag from which the first data is read and wherein the request further comprises the serial number.

According to a variant embodiment of the method, the reading first data and the reading second data comprises reading the first data and the second data through optical code reading.

According to a variant embodiment of the method, the reading first data and the reading second data comprises reading the first data and the second data through short-range radio communication.

According to a variant embodiment of the method, the reading first data comprises reading the first data through optical code reading, and the reading second data comprises reading the second data through a short-range radio communication.

According to a variant embodiment of the method, the optical code reading is a Quick Response code reading.

According to a variant embodiment of the method, the short-range radio communication is a Near Field Communication.

According to a variant embodiment of the method, the first data comprises a channel number of distribution of the audio/video content, the channel number being transmitted to the audio/video receiver through transmission via the contactless information sharing arrangement, and the audio/video receiver selecting the transmitted channel number.

The present disclosure also relates to a mobile device, comprising a contactless information reader, configured to read first data related to audio/video content from a medium comprising a contactless information arrangement, the first data comprising a resource locator identifying a provider for providing the audio/video content. The contactless information reader is further configured to read second data related to an identification of a subscriber of the provider from a second contactless information arrangement associated with an audio/video receiver on which to render the audio/video content. The mobile device further comprises a communication interface for connection to a data communication network, configured to transmit a request to the provider identified by the resource locator for accessing the audio/video content through the audio/video receiver, the request comprising the second data.

According to a variant embodiment of the device, the contactless information reader is an optical code reader.

According to a variant embodiment of the device, the contactless information reader is a short-range radio communication interface.

According to a variant embodiment of the device, the short-range radio communication interface is a Near-Field Communication interface.

### BRIEF DESCRIPTION OF THE DRAWINGS

More advantages of the present principles will appear through the description of particular, non-restricting embodiments of the disclosure. In order to describe the manner in which the advantages of the present principles can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring of the disclosure.

The exemplary embodiments will be described with reference to the following figures:
**Figure 1** is a diagram illustrating a distribution of DRM protected digital content.
**Figure 2** is a diagram illustrating an embodiment according to the present principles.
**Figure 3** is a sequence diagram illustrating a particular embodiment of the present principles related to figure 2.
**Figure 4** is a diagram illustrating another embodiment according to the present principles.
**Figure 5** is a sequence diagram illustrating a particular embodiment of the present principles related to figure 4.
**Figure 6** is a receiver according to a particular embodiment of the present principles.
**Figure 7** is a flow chart of a particular embodiment according to the present principles.

### DETAILED DESCRIPTION

Digital rights management is a set of access control technologies including copy protection technologies, which are used with the intent to control the use of digital content and devices. In digital television broadcast technology, the use of digital rights management (DRM) is widely spread and highly accepted. In Advanced Television Systems Committee (ATSC), Digital Video Broadcasting (DVB) and Association of Radio Industries and Business (ARIB) standards for example, so-called Conditional Access system (CA) standards are defined in specification documents. According to these standards DRM protected digital streams are scrambled (obfuscated) and can only be descrambled by a receiver comprising a specific smart card of a subscriber to a digital television offer. A DRM protected digital television stream is scrambled with a key that is referred to as the control word or Entitlement Control Message (ECM). This key is changed very frequently. To unscramble the stream the receiver must have the control word. Control words are comprised in the digital television stream in encrypted form. To decrypt the control word, the receiver's CA system must receive a decryption enablement message known as Entitlement Management Message (EMM). EMMs are inserted into the digital television stream and are specific to a particular subscriber that is identified by the subscriber's smart card when inserted in the receiver's smart card interface.

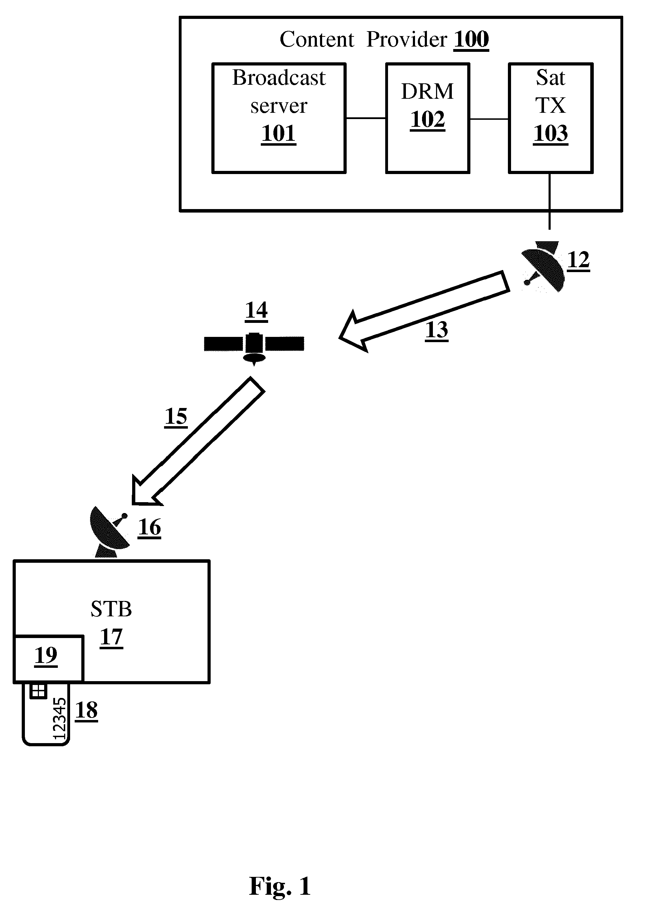

**Figure 1** is a diagram illustrating a distribution of DRM protected digital content from a content provider to a receiver device. A content provider **100** has a broadcast server **101** which provides digital content to DRM server **102.** DRM server **102** adds DRM protection to the digital content before it is transmitted to satellite **14** via satellite dish **12** and uplink **13.** A receiver device **17** receives the DRM protected content from satellite **14** via a satellite dish **16** and a downlink **15.** The DRM protected digital content is unscrambled by the CA module **19** in the receiver **17,** based on information received from the subscriber's smart card **18** and EMMs in the digital content, as described above. DRM is respected and controlled in the distribution chain of figure 1.

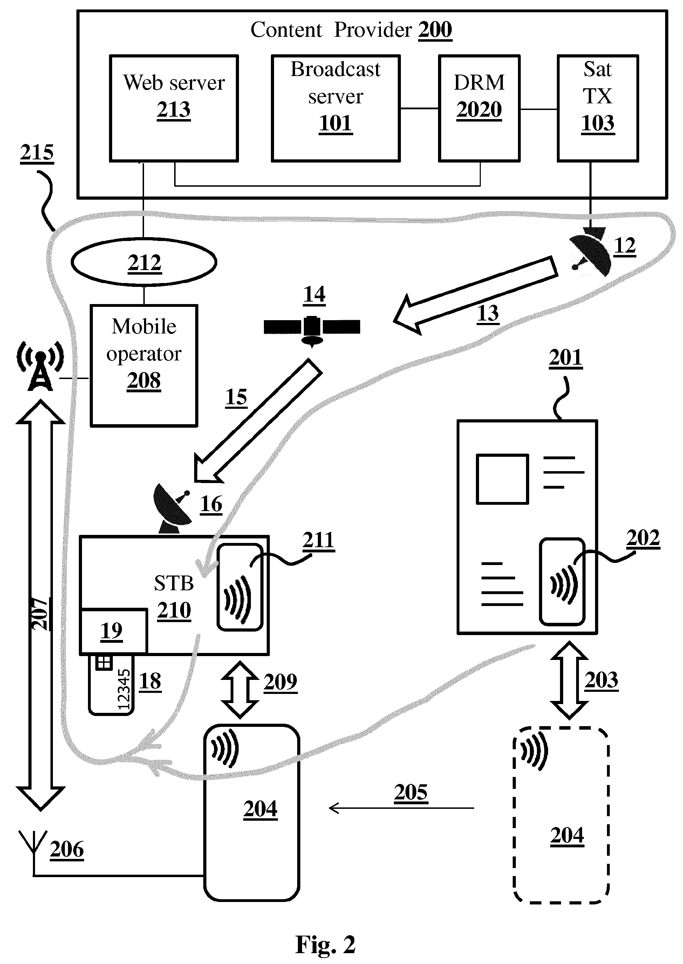

**Figure 2** is a diagram illustrating an embodiment according to the present principles. A content provider **200** comprises, in addition to the elements already described with reference to Figure 1, a web server **213.** The DRM **102** of figure 1 is replaced by a DRM **2020,** which is coupled to web server **213.** A magazine **201** contains an embedded NFC (symbol " 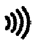 ") tag **202.** An NFC enabled mobile phone **204** reads data **203** from NFC tag **202** embedded in an advertisement included in a medium such as magazine **201.** The data comprises a Uniform Resource Locator (URL) identifying the content provider **10.** The NFC tag **202** is related to a promotional event that allows temporary access to a DRM protected broadcast sports channel that is not part of the subscription to the digital television channels that can be accessed with smart card **18.** The mobile phone **204** is moved **205** to the proximity of NFC enabled receiver **210,** such as a set-top box, so that they in turn exchange information **209.** Reference **211** is a placeholder for indicating a NFC sensitive area on device **210.** The information **209** exchanged comprises a transmission of a subscriber identifier (ID) from the device **210** to mobile phone **204.** The subscriber ID can be a smart card ID. The mobile phone **204** transmits the subscriber ID, received from device **210,** to the URL retrieved from the NFC tag **202** via mobile communication antenna **206,** transmission path **207,** mobile operator **208** and Internet **212.** This is for example in the form of a secure http request with one or more parameter arguments such as:
https://www.provider_name.com/sportchpromo?subID=12345
wherein "www.provider_name.com/sportchpromo" is the URL retrieved from the NFC tag **202,** "?" indicates that an URL parameter follows, "subID" identifies the parameter, and "1234XYZ" is the parameter value, i.e., the subscriber ID retrieved from device **210.** For additional security, the subscriber ID in the http request is an encrypted subscriber ID received from device **210.** The information is received by web server **213** of content provider **200.** The URL is used to locate the web server **213.** The subscriber ID is verified by the content provider and authorization is given to the DRM **2020** to temporary give the subscriber access to the DRM protected broadcast sports channel. For the duration of the promotional event, DRM **2020** adds EMMs for the subscriber to the DRM protected broadcast sports channel. When receiver **210** is tuned to the DRM protected broadcast sports channel, the EMMs allow the receiver **210's CA module 19** to decrypt the ECMs and descramble the DRM protected broadcast content of the sports channel, and the channel can be visualized via receiver **210.** Arrow **215** illustrates the information flow: device **204** reads URL from NFC tag **202** and reads subscriber identifier from receiver **210;** device **204** transmits subscriber identifier to content provider **200** using URL; content provider **200** adds EMMs which are received by receiver **210.**

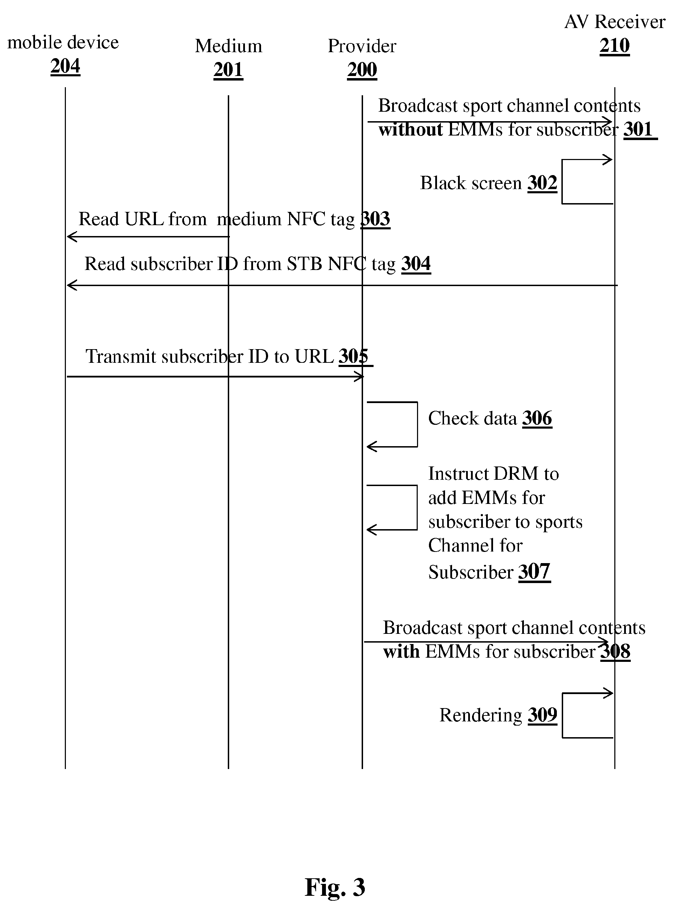

**Figure 3** is a sequence diagram illustrating a particular embodiment of the present principles related to figure 2. A DRM protected broadcast sports channel is transmitted to a plurality of broadcast receivers by content provider **200** and is received **301** by receiver **210.** As the sports channel is DRM protected and subscriber smart card **18** in the receiver's CA module **19** does not allow access to the sports channel as it is not part of a subscribed channel offering, the receiver **210** CA module **18** cannot descramble the sports channel contents. This results in the rendering of a black screen, **302,** on a rendering device associated with the receiver **210.**

The NFC enabled mobile device, such as mobile phone **204** is approached to an advertisement in magazine **201** offering temporary access to the broadcast sports channel as a promotional offer. In **303,** data is read from the magazine's NFC tag **202** by the mobile phone **204** using the NFC technology. The data comprises a URL identifying a provider providing the broadcast sports channel. Then the NFC enabled mobile device **204** is moved to the proximity of the NFC placeholder **211** on receiver **210,** and data from NFC tag associated with the receiver **210** is read **304** by the mobile phone **204** using the NFC technology. In this regard, the receiver **210** transmits the subscriber ID read from the subscriber's smart card **18** to the mobile device **204** via NFC, the subscriber ID identifying that the user of the receiver **210** is a subscriber of the provider. In **305,** at least some of the data read from the NFC tag is transmitted via transmission path **207,** mobile operator **208,** Internet **212** to the content provider's **200** URL read from the magazine's **201** NFC tag and is received by the content provider's web server **213.** In **306,** the content provider's DRM **2020** verifies the data received from the NFC enabled mobile device **204.** If the result is that access rights for accessing the broadcast sports channel should be given to the subscriber, the content provider's DRM **2020** adds, reference **307,** EMMs for the subscriber to the broadcast sports channel that is transmitted, **308,** to the plurality of broadcast receivers by transmitter **103.** The subscriber's receiver **210** receives the EMMs, the CA module **18** decrypts the ECMs and descrambles the DRM protected broadcast sport channel contents and renders **309** the broadcast sport channel audio/video contents on an audio/video rendering device associated with the receiver **210.**

According to a variant embodiment, the data transmitted by the mobile device **204** to the content provider **200** comprises a serial number of the NFC tag in the magazine **201,** obtained during operation **303.** This enables the content provider **200** to verify the serial number and allows the content provider **200** to prohibit reuse of the associated promotional offer by other users.

Those skilled in the art should appreciate that the present principles are not limited to NFC enabled devices. While NFC technology is a contactless information sharing technology that is flexible, fast, easy to use and secure and is for example used for contactless payments, in embodiments requiring less tight security, other types of contactless information sharing technology can be used, such as QR (Quick Response) codes. An advantage of QR codes is that they are relatively robust and cheap to produce.

According to a variant embodiment, at least one of the NFC tags is replaced by a QR code.

According to a variant embodiment, the data related to the audio/video content as for example the above discussed promotional offer printed in magazine **201** is encoded in a QR code in printed form rather than using an NFC tag, and mobile device **204** reads the printed QR code rather than an NFC tag. The data encoded in the QR code comprises for example a URL and a serial number of the QR code.

According to a variant embodiment, the receiver **210** shows a QR code on a display associated with the device for transmitting data to mobile device **204,** and mobile device **204** reads the displayed QR code rather than an NFC tag. Displaying the QR code on a display rather than printing a QR code allows the QR code to be generated dynamically, so that the data encoded in the QR code comprises for example the subscriber ID as read by device **210** from the smartcard **18** inserted in the CA module **19** of device **210.**

According to yet another variant embodiment, different types of contactless information sharing technologies are mixed. For example, data related to the audio/video content, not requiring a high level of security, is encoded in a printed QR code in a paper magazine or shown on a display, while data related to a subscriber, being sensitive information requiring a high level of security, is encoded in an NFC tag associated with the digital audio/video receiver.

According to a variant embodiment, the mobile device **204** transmits a channel number to the receiver **210** via NFC. The channel number is that of the channel where audio/video content is broadcasted that is related to the magazine's **201** NFC tag **202** and that is retrieved during the reading of the magazine's **201** NFC tag **202.** The receiver **210** then changes channel to the channel number transmitted by the mobile device **204.** This variant advantageously allows the user of the mobile device **204** according to the present principles to avoid having to request the receiver **210** to change to the channel corresponding to the audio/video content related to the magazine's **201** NFC tag **202.** The user of the mobile device **204** simply taps the NFC tag **202** in the magazine **201,** then taps the NFC tag associated to the receiver 210, which makes the receiver **210** change to the channel related to the NFC tag **202** in the magazine **201** and video and audio will arrive when the CA module **19** of the receiver **210** descrambles the audio/video stream with the subscriber's EMMs in the channel data stream. During the delay that is required for transmission of data to the content provider **200** and for setting up the distribution of EMMs in the data stream corresponding to the channel related to the NFC tag **202** in the magazine **201** and for descrambling the audio/video contents of the channel by the receiver **210,** the receiver **210** can show a message for example indicating that an initialization of receipt of the channel is ongoing.

Those skilled in the art should appreciate that the present principles are not limited to promotional offers. In other embodiments, an NFC tag in a magazine is related to a non-commercial item such as a video for a learning event. Those skilled in the art should appreciate that the present principles are not limited to magazines. Without diverting from the present principles, the magazine can be replaced by a book, an e-book, a DVD or in general any type of object with a contactless information sharing technology. Those skilled in the art should appreciate that the mobile device can be for example a smart phone, a tablet, or a portable PC. Those skilled in the art should appreciate that the communication path between the mobile device and the content provider's web server is other than depicted in figure 2, for example a WiFi or Bluetooth connection. Those skilled in the art should appreciate that the present principles are not limited to Set-Top Box like receiver devices. In other embodiments, the receiver device **210** is integrated into a rendering device, such as a digital television comprising a digital television decoder arrangement. Those skilled in the art should appreciate that the present principles are not limited to satellite transmission and reception, and that the present principles equally apply to cable transmission or to Digital Terrestrial Transmission (DTT) technology. Those skilled in the art should appreciate that the present principles are not limited to broadcast transmission of audio/video content, and the present principles equally apply to non-broadcast transmission such as Video on Demand transmission. Those skilled in the art should appreciate that the operations **303** and **304** of reading data can equally be executed in reverse order.

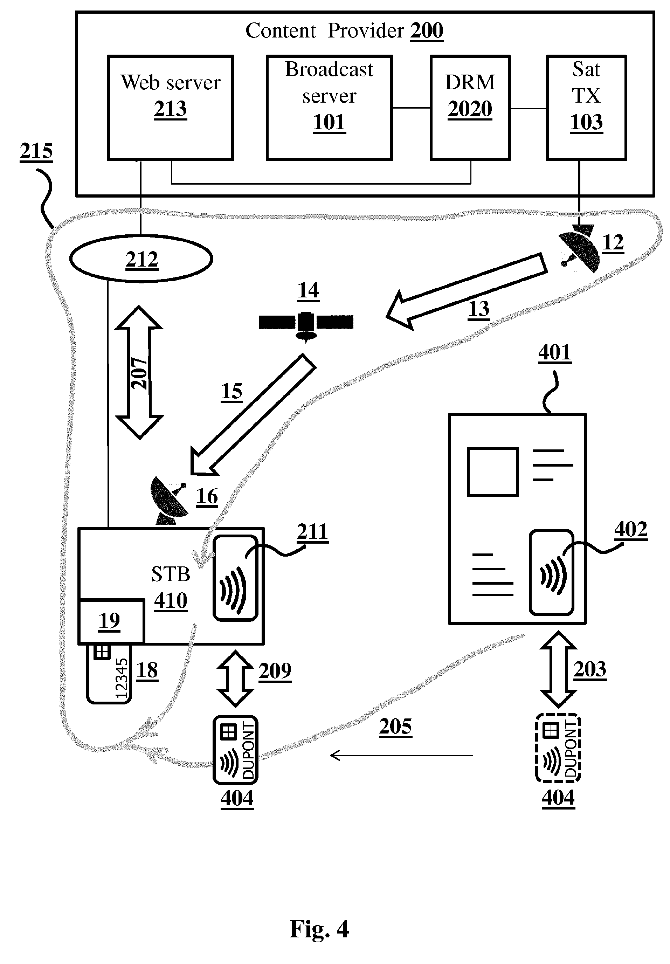

**Figure 4** is a diagram illustrating another embodiment according to the present principles. One of the differences with the embodiment illustrated in figure 2 is that the mobile device **404** is a credit card or smart card. Set top box **410** is connected to the Internet **212** via a wired or wireless interface. A medium **401** comprises an active NFC tag **402.**

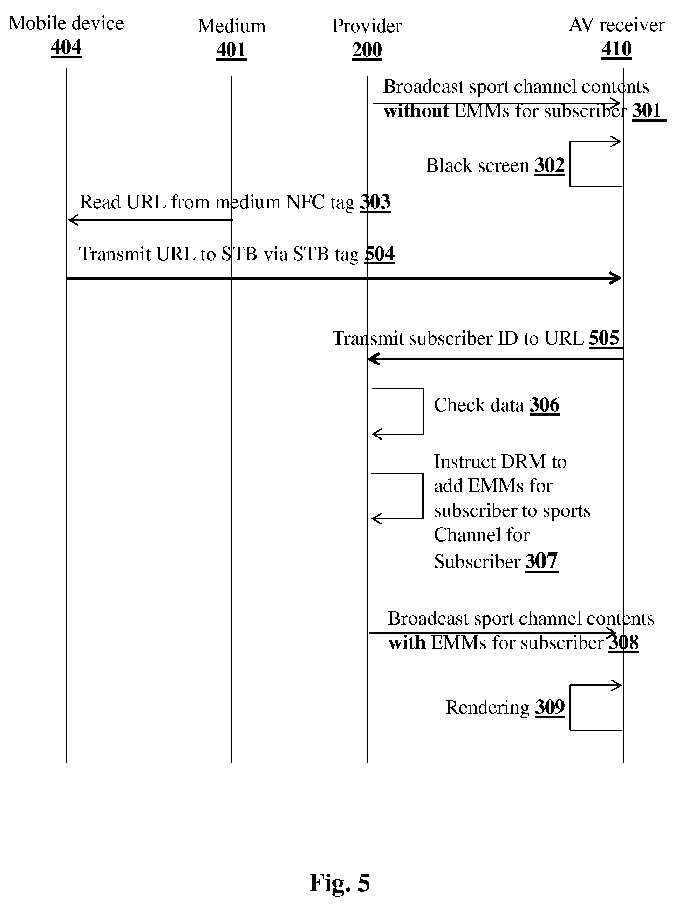

**Figure 5** is a sequence diagram illustrating a particular embodiment of the present principles related to figure 4. Represented are NFC enabled mobile device (e.g., credit card) **404,** medium **401,** provider **200** and NFC enabled STB **410.** Communications **504** and **505** replace communications **304** and **305** of figure 3. When the mobile device **404** has retrieved the URL from the medium's NFC tag (arrow **303),** the mobile device is approached to the NFC enabled receiver device **410,** and the mobile device transmits the received URL to the NFC enabled STB **410** (arrow **504**). The STB, that has an Internet connection, retrieves the subscriber identifier and transmits the subscriber identifier to the URL (e.g., the webaddress of provider **200**). This embodiment allows to use a credit card as an intermediate device. Further, according to this embodiment there is no need to communicate the subscriber identifier to the intermediate device **404,** as according to this embodiment the subscriber identifier is communicated to the provider by the AV receiver **410.** The AV receiver **410** can have a secure and privileged communication with the provider **200.** Not communicating the subscriber identifier to an intermediate device that possibly cannot be thrusted may be preferred for security reasons.

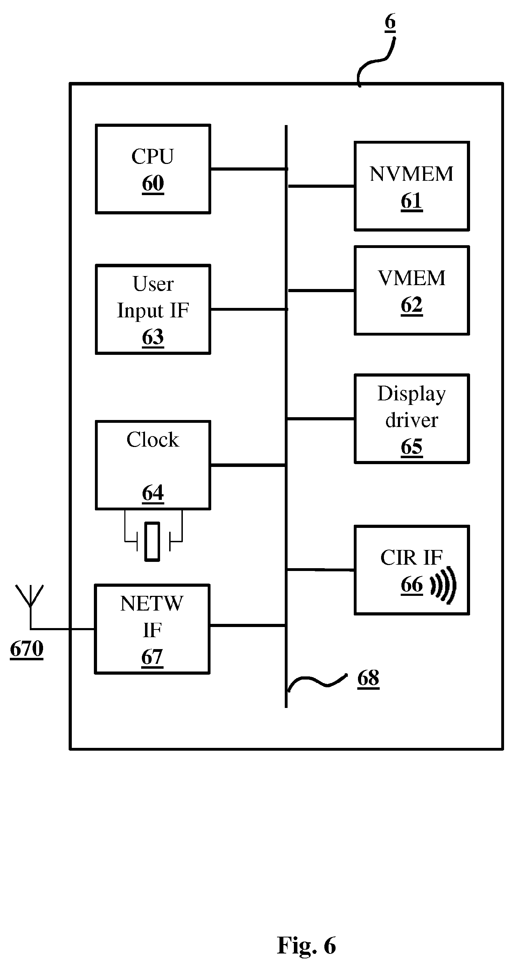

**Figure 6** is a mobile device **6** according to a particular embodiment of the present principles. The mobile device 6 is capable of implementing the disclosed principles. The mobile device comprises a central processing unit or CPU **60,** a non-volatile memory **61,** a volatile memory **62,** a user input interface **63,** a clock unit **64,** display driver **65,** a contactless information reader interface **66,** and a network interface **67** connected to an antenna **670.** All these elements are interconnected via a data- and communication bus **68.** Network interface **67** is an interface for short- or long range wireless communication, such as Long Term Evolution (LTE) or fourth, third or second generation (4G/3G/2G), WiMax, WiFi, Bluetooth (BT). Contactless information reader interface **66** is for example an NFC or QR reader interface. User input interface **63** is for example a tactile display or a keypad. Display driver is for example an Liquid Crystal Display (LCD), or Organic Light Emitting Diode (OLED) display driver or a High Definition Multimedia Interface (HDMI) display driver for connection to an external display device. Antenna **670** is for example a single or multiple (e.g., for multiple-input and multiple-output (MIMO)) internal and/or external antenna(s). The skilled in the art should appreciate that the mobile device 6 can have more or less elements than depicted in figure 6. For example, the device 6 has more than one microprocessor, no user input interface or multiple user input interfaces for different input means, no display driver or several display drivers for different outputs, no network interface or several network interfaces.

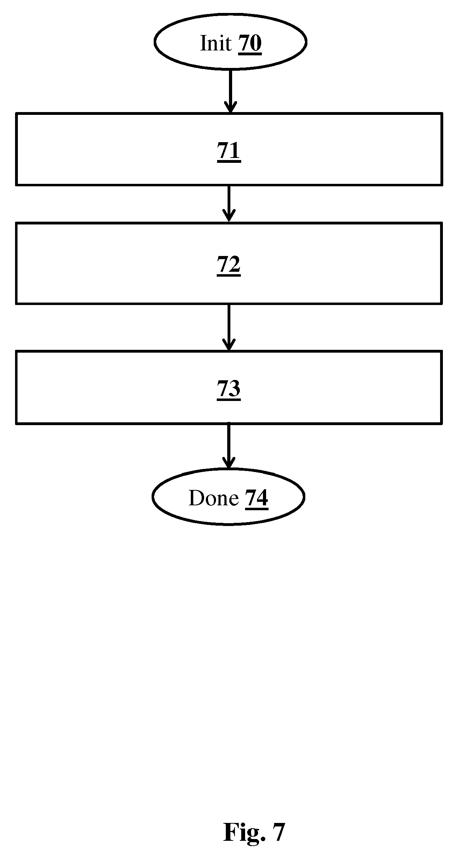

**Figure 7** is a flow chart of a particular embodiment according to the present principles. The exemplary process in the flow chart is performed by the mobile device **6.** In a first step **70,** any variables and memory space are initialized that are used during execution of the method. In a step **71,** first data is read that is related to the audio/video content from a medium using the contactless information sharing arrangement. The first data comprises a resource locator identifying the provider. In a step **72,** second data is read that is related to an identification of a subscriber of the provider from the audio/video receiver using the contactless information sharing arrangement. In a step **73,** a request to the provider identified by the resource locator is transmitted over a data communication network, the request comprising the second data, wherein responsive to the request, the audio/video receiver receives the audio/video content renderable by the audio/video receiver. In step **74,** the exemplary process is done.

Some elements in the drawings may not be used or be necessary in all embodiments. Some operations may be executed in parallel. Variant embodiments other than those illustrated and/or described are possible.As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for accessing audio/video content provided by a provider through an audio/video receiver, **characterized in that** the method is implemented by a mobile device (6) comprising at least one contactless information sharing arrangement, the method comprising:
reading (71) first data related to said audio/video content from a medium using said at least one contactless information sharing arrangement, said first data comprising a resource locator identifying said provider;
reading (72) second data related to an identification of a subscriber of said provider from said audio/video receiver using said at least one contactless information sharing arrangement; and
transmitting (73) over a data communication network a request to said provider identified by said resource locator, said request comprising said second data, wherein responsive to said request, said audio/video receiver receives said audio/video content renderable by said audio/video receiver.

2. The method according to claim 1, wherein said first data further comprises a serial number of a contactless information tag from which said first data is read and wherein said request further comprises said serial number.

3. The method according to claim 1 to 2, wherein said reading first data and said reading second data comprises reading said first data and said second data through optical code reading.

4. The method according to claim 1, wherein said reading first data and said reading second data comprises reading said first data and said second data through short-range radio communication.

5. The method according to claim 1, wherein said reading first data comprises reading said first data through optical code reading, and said reading second data comprises reading said second data through a short-range radio communication.

6. The method according to claim 3 or 5, wherein said optical code reading is a Quick Response code reading.

7. The method according to claim 4 or 5, wherein said short-range radio communication is a Near Field Communication.

8. The method according to claim 1 or 2, wherein said first data comprises a channel number of distribution of said audio/video content, said channel number being transmitted to said audio/video receiver through transmission via said contactless information sharing arrangement, and said audio/video receiver selecting said transmitted channel number.

9. A mobile device (6), **characterized in that** it comprises:
a contactless information reader (66), configured to read first data related to audio/video content from a medium (201, 401) comprising a contactless information arrangement (202, 402), the first data comprising a resource locator identifying a provider for providing said audio/video content;
said contactless information reader (66) being further configured to read second data related to an identification of a subscriber of said provider from a second contactless information arrangement (211) associated with an audio/video receiver (210) on which to render said audio/video content; and
a communication interface (67) for connection to a data communication network, configured to transmit a request to said provider identified by said resource locator for accessing said audio/video content through said audio/video receiver, said request comprising said second data.

10. The method according to claim 9, wherein said contactless information reader is an optical code reader.

11. The method according to claim 9, wherein said contactless information reader is a short-range radio communication interface.

12. The method according to claim 11, wherein said short-range radio communication interface is a Near-Field Communication interface.
